# EUROPÄISCHE PATENTANMELDUNG

(11) **EP 1 400 669 A1**
(43) Veröffentlichungstag der Anmeldung: **24.03.2004**
(21) Anmeldenummer: 03021221.1
(22) Anmeldetag: 18.09.2003
(51) Int. Cl.: F02C 7/18, F02C 6/08, F02C 6/10, F02C 1/02, F02C 7/12

(54) **Gasturbine mit Vorrichtung zur Arbeitsentnahme zur Kühlung von Scheiben**

(30) Priorität: 23.09.2002 DE 10244192
(71) Anmelder: Rolls-Royce Deutschland Ltd & Co KG, 15827 Dahlewitz (DE)
(72) Erfinder: Friedl, Winfried-Hagen, 12305 Berlin (DE); Au, Jörg, 10827 Berlin (DE)
(74) Vertreter: Weber, Joachim, Dr.

(57) **Zusammenfassung**

Die Erfindung bezieht sich auf eine Gasturbine mit zumindest einem Verdichter 1 und zumindest einer Turbine 2, wobei ein Teil der vom Verdichter 1 austretenden Luft einer Brennkammer 3 zugeführt wird und ein weiterer Teil als Kühlluft entnommen wird, dadurch gekennzeichnet, dass zumindest ein Teil der Kühlluftströmung 4 zur Energieentnahme durch eine Sekundärluftturbine 5 geleitet wird.

## Beschreibung

Die Erfindung bezieht sich auf eine Gasturbine mit einer Vorrichtung zur Arbeitsentnahme zur Kühlung von Scheiben.

Im Einzelnen bezieht sich die Erfindung auf eine Gasturbine gemäß den Merkmalen des Hauptanspruchs, nämlich eine Gasturbine mit zumindest einem Verdichter und zumindest einer Turbine, wobei ein Teil der vom Verdichter austretenden Luft einer Brennkammer zugeführt wird und ein weiterer Teil als Kühlluft entnommen wird.

Bei Gasturbinen wird insbesondere die Scheibe der ersten Hochdruckturbinenstufe mit Luft von zwei verschiedenen Kompressorstufen temperiert bzw. gekühlt. Der Rand der Scheibe wird, zusammen mit den Turbinenschaufeln und oft auch mit dem Diaphragma, immer mit Verdichteraustrittsluft gekühlt. Die Nabe der Scheibe wird mit Luft einer niedrigeren Kompressorstufe, die oft durch einen Wirbelgleichrichter bereitgestellt wird, gekühlt.

Die steigende Leistungskonzentration im Kerntriebwerk einer Gasturbine erhöht zunehmend die Verdichteraustrittstemperatur und somit auch die Temperaturen derjenigen Teile, die mit dieser Luft in Kontakt kommen. Um die entstehenden Thermalspannungen im akzeptablen Rahmen zu halten, dürfen die Temperaturänderungen innerhalb der Scheibe ein bestimmtes Maß nicht überschreiten. Dies kann bis zu einem gewissen Grad durch geeignete Temperierung der Scheibennabe gewährleistet werden, nämlich durch Anhebung der zugeführten Lufttemperatur.

Der Stand der Technik beschreibt Möglichkeiten, die Temperatur der Kompressoraustrittsluft durch einen zusätzlichen Kühler zu senken. Um den dabei auftretenden, unerwünschten Druckverlust in dem Kühler zu kompensieren, sind bei stationären Gasturbinen kleine Kompressorbeschaufelungen unterhalb der Brennkammer vorgesehen, welche den Druck der Kühlluft vor dem Kühler erhöhen.

Insgesamt ergeben sich beim Stand der Technik folgende Nachteile bzw. Problemkreise: Je heißer die Kühlluft ist, die dem Kompressor entnommen wird, desto mehr Luft wird zur Kühlung der Schaufeln benötigt und desto mehr werden die Scheiben durch die heiße Kühlluft aufgeheizt. Die hieraus resultierende Abnahme der Festigkeit der Scheiben und der Schaufeln kann bis zu einem gewissen Grad durch die Verwendung thermisch höher belastbarer Materialien oder durch Materialaufdickung kompensiert werden. Der Nachteil liegt jedoch insbesondere in den höheren Herstellungskosten.

Weiterhin führt der höhere Kühlluftverbrauch, zusammen mit den aus oben genannten Gründen schwereren Scheiben, zu einem schlechten spezifischen Treibstoffverbrauch. Hieraus ergeben sich eine geringere Reichweite eines Flugzeugs sowie erhöhte Treibstoffkosten. Weiterhin erweisen sich das höhere Gewicht und die höheren Fertigungskosten als sehr nachteilig.

Um die Kühlluft, welche die Scheibennabe umspült, geeignet zu temperieren, wird sie durch einen schweren Wirbelgleichrichter geleitet. Weiterhin wird diese Kühlluft zusätzlich zur Abdichtung der hinteren Lagerkammer verwendet. Eine Erhöhung der Temperatur der Kühlluft führt zu verstärkten Ölablagerungen auf den aufgeheizten Wänden der Lagerkammer sowie zu einem erhöhten Risiko von Ölfeuern.

Der Erfindung liegt die Aufgabe zugrunde, eine Gasturbine der eingangs genannten Art zu schaffen, welche bei einfachem Aufbau, sicherer Funktionsweise, günstigen Herstellungskosten und geringem Gewicht eine effiziente Kühlung der Hochdruckturbinenstufe unter Vermeidung der Nachteile des Standes der Technik ermöglicht.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist somit vorgesehen, dass zumindest ein Teil der Kühlluftströmung zur Energieentnahme durch eine Sekundärluftturbine geleitet wird.

Die erfindungsgemäße Gasturbine zeichnet sich durch eine Reihe erheblicher Vorteile aus.

Durch die erfindungsgemäße Sekundärluftturbine wird der Kühlluft, die am Verdichter austritt, Energie entnommen, bevor diese die Hochdruckturbinenscheiben erreicht. Die Kühlluft wird somit sehr wirkungsvoll abgekühlt. Gleichzeitig kann die entnommene Energie zur Leistungssteigerung der Gasturbine verwendet werden, da die Sekundärluftturbine auf der Welle der Gasturbine aufgesetzt ist.

Besonders vorteilhaft ist es erfindungsgemäß, dass auf komplexe und teure zusätzliche Kühleinrichtungen, wie etwa die aus dem Stand der Technik bekannten Kühler, verzichtet werden kann. Dabei führt der Verzicht auf derartige Kühler nicht nur zu einer Reduzierung der Kosten, sondern auch zu einer verringerten Komplexität der Gasturbine, da auch zusätzliche Leitungen oder Ähnliches nicht erforderlich sind. Auch hinsichtlich des Gesamtgewichts ergeben sich Vorteile.

Ein wesentlicher Vorteil der Erfindung besteht auch darin, dass die Kühllufttemperatur bereits auf der Vorderseite der Hochdruckturbinenscheiben abgesenkt wird und auf diese Weise die thermale Belastung in diesem Bereich reduziert ist. Als weiterer Effekt kann die Luft der Nabenkühlung eine geringe Temperatur haben, ohne dass große Thermalspannungen in die Scheibe induziert werden. Durch die geringere thermische Belastung kann somit das Gewicht der Scheibe reduziert werden.

Weiterhin ist es vorteilhaft, dass zusammen mit neuen Herstellungsverfahren für die Scheibe kostengünstigere Materialien für die Diaphragmabereiche und die Nabenbereiche der Scheibe eingesetzt werden können.

Im Gegensatz zum Stand der Technik erzeugt die Kühlluft bei ihrer Energieentnahme Leistung. Dies führt zu einer Erhöhung des Wirkungsgrades der Gasturbine und zu einer Reduzierung des Treibstoffverbrauchs.

Durch die Reduzierung der Temperatur der Nabenkühlluft erhöht sich die Sicherheit vor Ölfeuern. Weiterhin ist es aufgrund der niedrigeren Temperaturen möglich, die hintere Lagerkammer konstruktiv einfacher zu gestalten und auf diese Weise sowohl Gewicht als auch Kosten zu sparen.

In einer besonders günstigen Ausgestaltung der Erfindung ist vorgesehen, dass der Rotor der Sekundärluftturbine auf der Hochdruckwelle der Gasturbine befestigt ist. Hierdurch ergibt sich, wie bereits erwähnt, die Möglichkeit, die Leistung der Sekundärluftturbine direkt der Gasturbinenleistung zuzuführen. Weiterhin ist eine konstruktiv einfache Lösung möglich.

Die Sekundärluftturbine ist bevorzugter Weise unterhalb des inneren Gehäuses der Brennkammer angeordnet. Es kann somit der in diesem Bereich zur Verfügung stehende Raum genutzt werden, ohne dass die Gesamtabmessungen der Gasturbine erhöht werden müssen.

Die erfindungsgemäße Sekundärluftturbine kann entweder als einstufige Turbine oder als 1 1/2-stufige Turbine ausgebildet sein. Insgesamt ergeben sich konstruktiv vielfältigste Lösungsmöglichkeiten.

Die Rotorbeschaufelung der Sekundärluftturbine kann einstükkig mit einem Bauteil der Hochdruckwelle ausgebildet sein. Alternativ ist es auch möglich, diese als separates Bauteil auszubilden und mit der Hochdruckwelle zu verbinden. Gleiches gilt für die Leitbeschaufelung der Sekundärluftturbine, die entweder einstückig mit einem Bauteil des Gehäuses oder als separates Bauteil ausgestaltet sein kann.

Im Folgenden wird die Erfindung anhand eines Ausführungsbeispiels in Verbindung mit der Zeichnung beschrieben. Dabei zeigt:
- Fig. 1: eine schematische Seiten-Schnittansicht einer erfindungsgemäßen Gasturbine mit erfindungsgemäßer Sekundärluftturbine, und
- Fig. 2: eine vergrößerte Seiten-Schnittansicht der Anordnung gemäß Fig. 1.

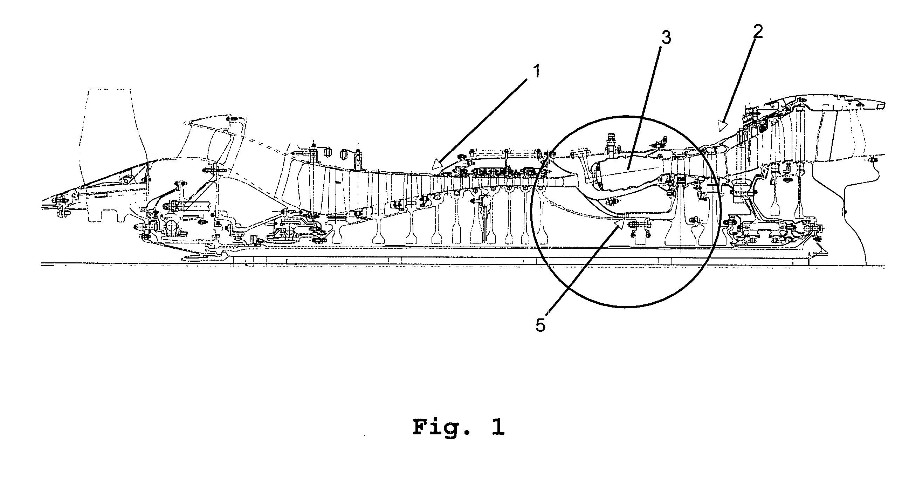

Die Fig. 1 zeigt eine schematische Schnittansicht einer erfindungsgemäßen Gasturbine. Diese umfasst einen Verdichter 1 sowie eine Turbine 2. Weiterhin ist eine Ringbrennkammer 3 vorgesehen. Auf eine detaillierte Beschreibung dieser Bauelemente kann an dieser Stelle verzichtet werden, da diese aus dem Stand der Technik bekannt sind.

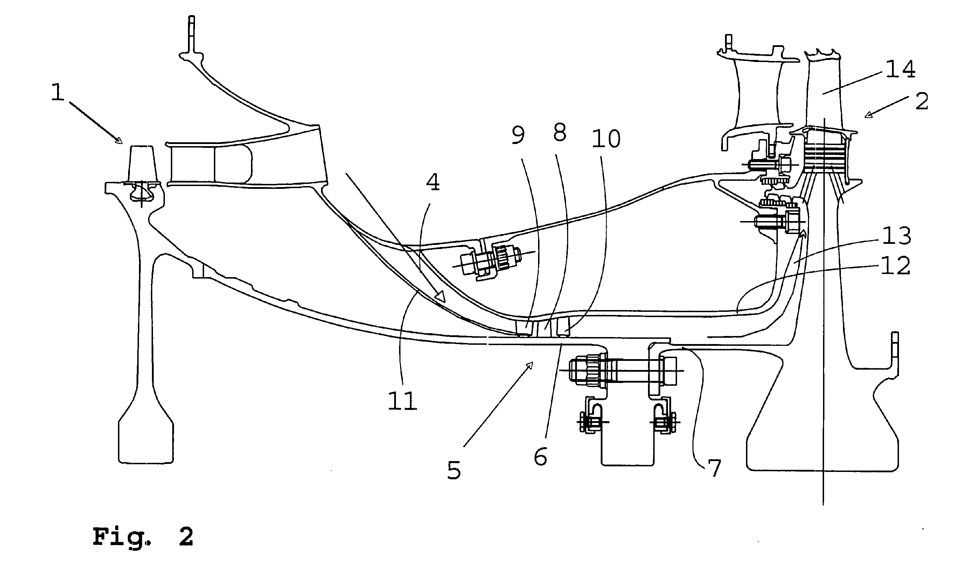

Die Fig. 2 zeigt vergrößerte Darstellungen (gemäß dem in Fig. 1 durch den Kreis angeordneten Detailausschnitt) der erfindungsgemäßen Sekundärluftturbine. Diese ist unterhalb des inneren Gehäuses der Brennkammer 3 angeordnet. Ihr wird über einen Kanal 11 eine Kühlluftströmung 4 zugeleitet. Diese trifft auf eine Leitbeschaufelung 9 einer Sekundärluftturbine 5. Die Sekundärluftturbine 5 ist mit einer Rotorbeschaufelung 8 versehen, die auf einem Rotor 6 befestigt ist. Bei dem gezeigten Ausführungsbeispiel handelt es sich um eine 1 1/2-stufige Sekundärluftturbine 5, welche eine weitere Leitbeschaufelung 10 umfasst, welche, ebenso wie die Leitbeschaufelung 9, an einem Gehäuse 12 befestigt ist. Der Rotor 6 ist Teil einer nur teilweise und schematisch dargestellten Rotorwelle 7.

Die Kühlluft wird nach dem Verlassen der Sekundärluftturbine 5 über einen nur schematisch dargestellten Kanal 13, u.a. einer Turbinenschaufel 14 der Turbine 2, zugeleitet.

Die Erfindung ist nicht auf das gezeigte Ausführungsbeispiel beschränkt, vielmehr ergeben sich im Rahmen der Erfindung vielfältige Abwandlungs- und Modifikationsmöglichkeiten. Diese betreffen insbesondere die Anordnung und die Ausgestaltung der Sekundärluftturbine sowie der hierfür benötigten Luftleitkanäle, Dichtungen oder Ähnliches, so wie dies schematisch auch in Fig. 2 gezeigt ist.

### Bezugszeichenliste

- 1: Verdichter
- 2: Turbine
- 3: Brennkammer
- 4: Kühlluftströmung
- 5: Sekundärluftturbine
- 6: Rotor
- 7: Hochdruckwelle
- 8: Rotorbeschaufelung
- 9: Leitbeschaufelung
- 10: Leitbeschaufelung
- 11: Kanal
- 12: Gehäuse
- 13: Kanal
- 14: Turbinenschaufel

## Patentansprüche

1. Gasturbine mit zumindest einem Verdichter (1) und zumindest einer Turbine (2), wobei ein Teil der vom Verdichter (1) austretenden Luft einer Brennkammer (3) zugeführt wird und ein weiterer Teil als Kühlluft entnommen wird, **dadurch gekennzeichnet, dass** zumindest ein Teil der Kühlluftströmung (4) durch eine Sekundärluftturbine (5) geleitet wird, um die Temperatur der Kühlluft abzusenken.

2. Gasturbine nach Anspruch 1, **dadurch gekennzeichnet, dass** der Rotor (6) der Sekundärluftturbine (5) auf der Hochdruckwelle (7) der Gasturbine befestigt ist.

3. Gasturbine nach Anspruch 1 oder 2, **dadurch gekennzeichnet, dass** die Sekundärluftturbine (5) unterhalb des inneren Gehäuses der Brennkammer (3) angeordnet ist.

4. Gasturbine nach einem der Ansprüche 1 bis 3, **dadurch gekennzeichnet, dass** die Sekundärluftturbine (5) als einstufige Turbine ausgebildet ist.

5. Gasturbine nach einem der Ansprüche 1 bis 3, **dadurch gekennzeichnet, dass** die Sekundärluftturbine (5) als 1 1/2-stufige Turbine ausgebildet ist.

6. Gasturbine nach einem der Ansprüche 1 bis 5, **dadurch gekennzeichnet, dass** die Rotorbeschaufelung (8) der Sekundärluftturbine (5) einstückig mit einem Bauteil der Hochdruckwelle (7) ausgebildet ist.

7. Gasturbine nach einem der Ansprüche 1 bis 5, **dadurch gekennzeichnet, dass** die Rotorbeschaufelung (8) der Sekundärluftturbine (5) als separates Bauteil ausgebildet und mit der Hochdruckwelle (7) verbunden ist.

8. Gasturbine nach einem der Ansprüche 1 bis 7, **dadurch gekennzeichnet, dass** die Leitbeschaufelung (9, 10) der Sekundärluftturbine (5) einstückig mit einem Bauteil des Gehäuses ausgebildet ist.

9. Gasturbine nach einem der Ansprüche 1 bis 7, **dadurch gekennzeichnet, dass** die Leitbeschaufelung (9, 10) der Sekundärluftturbine (5) als separates Bauteil ausgebildet ist und mit dem Gehäuse verbunden ist.
